# EUROPÄISCHE PATENTANMELDUNG

(11) **EP 0 551 655 A1**
(43) Veröffentlichungstag der Anmeldung: **21.07.1993**
(21) Anmeldenummer: 92122111.5
(22) Anmeldetag: 29.12.1992
(51) Int. Cl.: B29B 17/00, B29B 9/02, B02C 4/02

(54) **Verfahren zum Zerkleinern von Kunststoffabfällen oder organischen, natürlichen Polymeren**

(30) Priorität: 10.01.1992 DE 4200443; 13.03.1992 DE 4207972
(71) Anmelder: BAYER AG, 51368 Leverkusen (DE)
(72) Erfinder: Wagner, Joachim, Dr., W-5000 Köln 80 (DE); Rasshofer, Werner, Dr., W-5000 Köln 80 (DE); Peltzer, Karl, W-5654 Leichlingen 1 (DE)

(57) **Zusammenfassung**

Insbesondere für das Recycling lassen sich beliebige Kunststoffe oder Kunststoffe enthaltende Komposite, Gemische oder Gemenge sowie organische oder natürliche Polymere, wie Cellulose (Stroh, Holz), zwischen bevorzugt feststehend gelagerten Walzen zerkleinern, die sich mit definiertem Drehzahlverhältnis bzw. definiertem Schergeschwindigkeitsverhältnis im Walzenspalt gleich- oder gegensinnig drehen, wobei eine Schergeschwindigkeit im Spalt von 0,0001 sec⁻¹ bis 100 000 sec⁻¹ eingehalten wird und die eingesetzten Kunststoffmaterialien eine Mindestdichte von 0,5 kg/m³ haben.

## Beschreibung

Alle Verfahren zum Recycling von Kunststoffen beinhalten eine Zerkleinerungsstufe. Die Kosten der Zerkleinerungsstufe entscheiden jedoch maßgeblich mit über die Wirtschaftlichkeit des Verfahrens. Die Kosten sind jedoch entscheidend, ob sich die gesellschaftlich gewünschte Wiederverwertung gebrauchter Kunststoffe überhaupt durchsetzen kann. Eine preiswerte Zerkleinerung ist aber auch für organische, natürliche Polymere, wie Cellulose (Holz, Stroh), erwünscht.

Es ist deshalb die Aufgabe der vorliegenden Erfindung, ein Verfahren zur Verfügung zu stellen, das eine effiziente Pulverherstellung aus beliebigen Kunststoffen, Gummi und Kunststoff enthaltenden Verbundkörpern oder Kunststoff enthaltenden Gemischen und Gemengen, aber auch aus organischen, natürlichen Polymeren, wie Cellulose (Holz, Stroh), erlaubt.

Bereits bekannt ist die Zerkleinerung von solchen Materialien mit Mühlen oder Extrudern. Bei Mühlen müssen die Einsatzstoffe bereits stark vorzerkleinert - in der Regel geschreddert und anschließend granuliert - sein. Bei - wie für viele Recycling-Verfahren notwendig - sehr kleinen Korngrößen sind Mühlen von beliebiger Auslegung jedoch zu teuer, da in diesen Maschinen nur noch kleine Mengen durchgesetzt werden können. Pulverherstellung ist in vielen Fällen nur über eine cryogene Mahltechnik möglich; diese ist wegen der zusätzlich benötigten Kältemittel sehr energieaufwendig.

Ein weiteres bekanntes Verfahren für die Zerkleinerung von Altgummi ist die Verwendung von Extrudern (z.B. Fa. Berstorff, DE-OS 3 332 629 und J. Janik und L. Bouskova, Int. Polym. Sci. Technol. (1990) 17(3), T/33/T37). Jedoch auch hier müssen die Materialien vorzerkleinert - in der Regel granuliert - werden. Schwierigkeiten macht auch die Brückenbildung im Einzugsbereich des Extruders bei solchen Materialien, die nur eine geringe Dichte und eine stark zerklüftete Oberfläche aufweisen, wodurch ein kontinuierliches Arbeiten bei der Pulverherstellung erschwert wird. Die bislang bekannten Extruder-Mahlverfahren ergeben Pulver der Teilchengröße im Bereich von 300 µm bis 500 µm.

Es ist weiterhin bekannt, Altgummistücke über Riffelwalzen zu granulieren. Hierbei werden spezielle geriffelte Walzenanlagen verwendet, um Altreifenstücke für das Extruder-Mahlen vorzuzerkleinern. In diesen Fällen werden minimale Partikelgrößen von ca. 3 mm erreicht.

Überraschenderweise wurde nun gefunden, daß diese Schwierigkeiten überwunden werden bei Verwendung von Walzenanlagen und Anwendung eines Verfahrens, wie es nachstehend näher beschrieben ist.

Gegenstand der vorliegenden Erfindung ist also ein Verfahren zur Zerkleinerung, bevorzugt Pulverherstellung, aus beliebigen Kunststoffen oder Kunststoffe enthaltenden Kompositen oder Gemischen bzw. Gemengen, aber auch aus organischen, natürlichen Polymeren, wie Cellulose (Holz, Stroh), zwischen Walzen, die sich mit definiertem Drehzahlverhältnis bzw. definiertem Schergeschwindigkeitsverhältnis im Walzenspalt gleich- oder gegensinnig drehen.

Das Neue ist darin zu sehen, daß
a) eine Schergeschwindigkeit im Spalt von 0,0001 sec⁻¹ bis 100 000 sec⁻¹ eingehalten wird und daß
b) die entweder alleine oder in Form von Kompositen oder Gemischen oder Gemengen eingesetzten Kunststoffmaterialien eine Mindest-Dichte von 0,5 kg/m³ haben.

Es ist dem Fachmann bekannt, daß es verschiedene Geometrien für die Auslegung der Walzen gibt. So ist es z.B. möglich, zylindrische oder konische Walzen zu wählen.

Vorzugsweise besitzen die eingesetzten Kunststoffmaterialien eine Größe von 1 mm bis 1 m, bevorzugt 1 mm bis 10 cm, bei Dicken bis etwa 10 cm.

Die Walzen werden vorzugsweise so betrieben, daß im Walzenspalt ein Schergefälle von 100 sec⁻¹ bis 20 000 sec⁻¹, bevorzugt von 1000 sec⁻¹ bis 10 000 sec⁻¹, herrscht.

Eine Vorzerkleinerung ist materialabhängig, meist nur bis zu einem Partikeldurchmesser von etwa 10 cm notwendig; die eingesetzten, zu zerkleinernden Materialien können gekühlt sein; bevorzugt werden die Materialien jedoch ungekühlt eingesetzt. Die Walzen können während des Mahlvorganges beheizt werden; bevorzugt werden die Walzen jedoch nicht beheizt, sondern zur Abführung der beim Mahlvorgang entstehenden Wärme zusätzlich gekühlt.

Die Walzen haben gemäß einer besonderen Durchführungsform des Verfahrens eine Betriebstemperatur von 0°C bis 200°C, bevorzugt 0°C bis 30°C, besonders bevorzugt 10°C bis 25°C.

Es werden Walzen mit einer stumpfen, bevorzugt aber mit einer glatten Oberfläche verwendet.

Gemäß einer weiteren besonderen Durchführungsform bilden die Walzen beim Mahlbetrieb einen Spalt unter 1 mm, bevorzugt unter 0,5 mm, besonders bevorzugt unter 0,1 mm.

Vorzugsweise wird das Mahlgut bei der Zerkleinerung gekühlt.

Dies kann direkt durch Wasserzugabe oder indirekt durch Kühlung der Walzen erfolgen.

Kühlung ist insbesondere für härtere und elastische Formen des Mahlgutes von Vorteil.

Dieses Mahlverfahren kann auf mehrere Weisen betrieben werden. So ist es z. B. möglich, bei Arbeiten mit nur einem Walzenpaar den Walzenspalt der Partikelgröße des Mahlgutes bei Fortschreiten des Mahlvorganges durch Nachstellen einer Walze anzupassen. In diesem Fall wird das Mahlgut mehrfach durch den Walzenspalt gefahren. Es ist jedoch weiterhin auch möglich - wie dem Fachmann hinlänglich bekannt -, mit mehreren Walzen in Kaskade zu arbeiten und gegebenenfalls hierbei die Walzenspalte sukzessive kleiner zu wählen.

Mehrere unterschiedliche oder gleiche Walzenanlagen in Kaskade haben zusätzlich den Vorteil, daß damit in einem kontinuierlichen Mahlprozeß bei höherem Durchsatz eine feinere Partikelgröße zu erzielen ist.

Mit diesem Verfahren sind eine große Anzahl von Vorteilen verbunden, die mit den bisher vorgeschlagenen Lösungen nicht möglich waren.

So können
- jetzt große Teile ohne starke Vorzerkleinerung in den Zerkleinerungsschritt eingespeist werden,
- beliebige Kunststoffe mit stark unterschiedlichen Dichten auch gemeinsam verarbeitet werden,
- auch sehr weiche Kunststoffe geringer Dichte zerkleinert werden,
- beliebige Gemische von thermoplastischen mit duroplastischen Kunststoffen bzw. Werkstoffen verarbeitet werden,
- beliebige Gemische von spröden und elastischen bzw. weichelastischen Materialien verarbeitet werden,
- jetzt Gemische von Thermoplasten und Duroplasten im Spritzguß verarbeitet werden, die sich vorher wegen eines zu groben Duroplastanteils nicht verspritzen ließen oder die jetzt bessere Eigenschaften haben, da die Duromerpartikel durch ihre sehr geringe Größe und gute Verteilung nun sehr gut in die Thermoplastmatrix eingebunden werden,
- besonders feinteilige Pulver hergestellt werden.
- bei gekapseltem Betrieb der Mahlanlage halogenhaltige Treibgase aus den Kavernen geschäumter Polymere effektiv freigesetzt und extrahiert werden.

Das Verfahren ist wirtschaftlich, so daß viele von Pulver/Granulat ausgehenden Recyclingmaßnahmen damit auch wirtschaftlich bedeutend werden können.

Außerdem sind folgende Merkmale mit dem erfindungsgemäßen Verfahren verbunden:
Es können alle Kunststoffe und organischen, natürlichen Polymere zerkleinert werden.

Es können alle Kunststoffe und organischen, natürlichen Polymere in jeder beliebigen Kombination gemeinsam zerkleinert werden.

Es können alle Kunststoffe und organischen, natürlichen Polymere in jeder Form eines, gegebenenfalls nur teilweise, kraftschlüssigen Verbundes gemeinsam zerkleinert werden.

Die Temperaturlagen und Scherverhältnisse des Walzmahlverfahrens können gegebenenfalls auch so gewählt werden, daß bei einem kraftschlüssigen Verbund zwischen Kaschierung, Oberflächenbeschichtung, Dekoren und anderen Oberflächenaufträgen und schaumförmigem Träger der Träger zerkleinert wird und die Kaschierung im wesentlichen erhalten bleibt.

Es können alle Kunststoffe und organischen, natürlichen Polymere in jeder Form eines Gemisches oder Gemenges gemeinsam zerkleinert werden.

Es können alle Kunststoffe und natürlichen, organischen Polymere in jeder Form eines Gemisches, Gemenges oder Verbundkörpers mit beliebigen Nichtkunststoffen gemeinsam zerkleinert werden, z.B. Holz, Glas, Keramik, Stoffe oder Metall.

Bevorzugte Kunststoffe sind thermoplastische oder duroplastische Polyurethane, Polyurethanharnstoffe oder Polyharnstoffe, deren Blends/Composite mit anderen Kunststoffen, Polycarbonat und Polycarbonatblends mit anderen Kunststoffen, ABS und ABS-Blends mit anderen Kunststoffen, PVC und PVC-Blends mit anderen Kunststoffen, PPS und PPS-Blends mit anderen Kunststoffen, PBT und PBT-Blends mit anderen Kunststoffen, LCP und LCP-Blends mit anderen Kunststoffen, PET und PET-Blends mit anderen Kunststoffen, PEK und PEK-Blends mit anderen Kunststoffen, SMA und SMA-Blende mit anderen Kunststoffen, PS und PS-Blende mit anderen Kunststoffen, PTFE und PTFE-Blends mit anderen Kunststoffen, PMMA und PMMA-Blends mit anderen Kunststoffen, POM und POM-Blends mit anderen Kunststoffen, Polyamid oder Polyamid-Blends mit anderen thermoplastischen Kunststoffen, Polyolefine oder Polyolefinblends mit anderen thermoplastischen Kunststoffen, besonders bevorzugt Polypropylenharze oder Polystyrolharze.

Die angegebenen Kunststoffe können noch weiter modifiziert sein. So können sie übliche anorganische, bevorzugt mineralische oder organische Füllstoffe oder Verstärkungsmaterialien in faserförmiger, flächiger oder anderer Art in kontinuierlicher oder diskreter Struktur haben, sie können übliche Verarbeitungshilfsmittel oder Mittel zur Verbesserung von mechanischen Eigenschaften, Oberflächen- oder Alterungseigenschaften beinhalten. Die angegebenen Kunststoffe können auch lackiert sein oder eine anderweitige Oberflächenmodifizierung durch stromlose oder elektrolytische Metallisierung oder Plattierung, Oberflächenätzung, Plasmabehandlung etc. erfahren haben.

Besonders bevorzugt sind thermoplastische oder duroplastische Polyurethane, Polyurethanharnstoffe oder Polyharnstoffe, wie sie z.B. beschrieben sind in Kunststoff-Handbuch, Band 7, "Polyurethane", Carl Hanser-Verlag München/Wien, 1. Auflage 1966 und 2. Auflage 1983.

Solche Polyurethane, Polyurethanharnstoffe oder Polyharnstoffe haben eine Dichte von größer 0,5 kg/m³ und werden z.B. zur Herstellung von Stoßfängern, für Dachhimmel, Hutablagen, Kofferraumauskleidungen, Türinnenverkleidungen, Kopfstützen, Sitze, Armaturentafeln, Konsolen, in energieabsorbierenden Schäumen etc. eingesetzt.

Ebenfalls besonders bevorzugt sind Verbundkörper oder Gemische aus diesen thermoplastischen oder duroplastischen Polyurethanen, Polyurethanharnstoffen oder Polyharnstoffen mit Materialien, wie sie zur Herstellung von Verbundkörpern eingesetzt werden, wobei diese Materialien z.B. Glasmatten, Textilien, Kunststoffolien, Schaumfolien, Holzkörper oder auch duromergebundene Zellulosematerialien sein können.

Das so hergestellte Pulver eignet sich als Ausgangsmaterial für verschiedenste Recycling-Techniken:
- Thermoplaste können in Pulverform der konventionellen Thermoplastverarbeitung zugeführt werden und lassen sich dabei relativ einfach verarbeiten und dabei blenden.
- Polyurethane sind in dieser Pulverform bei chemolytischen Verfahren, wie z.B. Glykolyse, Alkoholyse, Aminolyse und Hydrolyse, vorteilhaft einsetzbar.
   Auch für das Fließpressen und die Spritzgußverarbeitung ist die Pulverform vorteilhaft; dies gilt besonders für lackiertes Ausgangsmaterial.
   Für den Einsatz als matrix-ähnliches und matrixgleiches Füllmaterial in PUR-Formulierungen ist die Pulverform in möglichst feiner Verteilung eine notwendige Voraussetzung für hohes Eigenschaftsniveau und gute Oberflächengestaltung.
- Die so hergestellten Polymerpulver können für thermische Behandlungsverfahren vorteilhaft eingesetzt werden.

### Beispiele

In den folgenden Beispielen wurde auf einem Labor-Walzwerk des Typs SK 6612 der Firma Berstorff, Hannover, gearbeitet. Diese Maschine besitzt zwei unabhängig in der Drehzahl im Bereich von 7 - 31,5 min⁻¹ steuerbare, festgelagerte Walzen des Umfanges 62 cm und der Länge 45 cm; der Walzenspalt kann bis auf unter 0,025 mm verringert werden. Die Walzen waren während der Mahlvorgänge nicht beheizt.

Die Messung der Partikel-Größenverteilung wurde mit einem Malvern-Particle-Sizer, Modell 2600, der Firma Malvern, Great-Malvern, UK, vorgenommen. Dieses Meßgerät arbeitet auf der Basis der Lichtbeugungs-Spektroskopie im Partikelgrößenbereich von 1 µm bis ca. 1 mm.

Die pulverförmigen Proben wurden zur Messung in Wasser eingerührt und ca. 60 sec. mit Ultraschall (Gerät XL der Firma Branson, Hilden, BRD) dispergiert. Die angegebenen mittleren Partikelgrößen sind diejenigen Partikelgrößen (= Durchmesser der massegleichen Kugel), bei der 50 % aller Teilchen kleiner und 50 % aller Teilchen größer als der angegebene Wert sind.

### Beispiel 1

Für die Pulverherstellung kam ein RIM-Polyurethanharnstoff mit Glasfaserverstärkung der Dichte von etwa 1200 kg/m³ zum Einsatz. Dieses Ausgangsmaterial ist nach folgender Vorschrift hergestellt worden. Verwendet wurde eine Polyol-Komponente bestehend aus
67,40 Tle. eines Polyethers der OH-Zahl 35, erhalten durch blockweise Addition von zuerst 87 Gew.-% Propylenoxid und dann 13 Gew.-% Ethylenoxid an Trimethylolpropan
24 Tle. eines Gemisches aus 65 Tln. 1-Methyl-3,5-diethyl-2,4-diamino-benzol und 35 Tln. 1-Methyl-3,5-diethyl-2,6-diamino-benzol (DETDA)
2 Tle. eines Polyricinolsäureesters mit einer > 5 liegenden Säurezahl
4,7 Tle. eines 2:1:1-Gemisches aus DETDA, Zinkstearat und Bis-(3-dimethylaminopropyl)-amin
0,7 Tle. Dabco 33 LV, ein aminischer Katalysator der Air Products
0,1 Tle. UL 28, ein Zinnkatalysator der Witco
0,1 Tle. B 8404, ein Siloxanstabilisator der Goldschmidt AG.
100 Tle. dieser Polyolformulierung werden mit 45,6 Tln. gemahlener Glasfaser MF 7901 Handelsprodukt (Bayer AG, Leverkusen, BRD) vermischt (entspricht einem Glasgehalt von 22,5 Gew.-%).
100 Tle. dieser Polyol/Glas-Mischung werden mit 40 Tln. eines Polyisocyanats nach dem Prinzip der Reaktionsspritzgußtechnik unter Verwendung einer geschlossenen Plattenform zu einem 4 mm dicken plattenförmigen Formkörper verarbeitet. Als Polyisocyanat wurde ein Umsetzungsprodukt von 4,4'-Diisocyanato-diphenylmethan mit Tripropylenglykol mit einem NCO-Gehalt von 24,5 Gew.-% verwendet.

Der so hergestellte Formkörper wurde mechanisch so vorzerkleinert, daß Teile einer Größe 10 cm x 10 cm x 4 mm resultierten.

Diese wurden ohne weitere Zerkleinerung auf dem Walzwerk gemahlen, und zwar unter folgenden Bedingungen:
- Drehzahl Walze 1: : 24 min⁻¹
- Drehzahl Walze 2: : 6 min⁻¹
- Walzenspalt: : 180 µm
- Anzahl der Material-Durchgänge durch den Walzenspalt: : 3
- Erreichte mittlere Partikelgröße: : 200 µm

### Beispiel 2

In diesem Beispiel wird die Zerkleinerung von Polyurethanschaumstoff der Dichte 450 kg/m³ beschrieben. Zur Schaumstoff-Herstellung dienten folgende Polyurethan-Rohstoffe:
90 g eines Polyethers vom Molekulargewicht 4800, der durch Anlagerung von Propylenoxid (87 %) und Ethylenoxid (13 %) an Trimethylolpropan erhalten wurde, 2,5 g Wasser, 2 g Tallöl und 0,4 g Dimethylaminopropylformamid wurden mit 47 g eines Polyphenylpolymethylen-polyisocyanats, das durch Phosgenierung eines Anilin-Formaldehyd-Kondensates erhalten wurde und einen NCO-Gehalt von 31 Gew.-% aufweist, vermischt und in die Form eingetragen.

Ein temperierbares Plattenmetallwerkzeug der Hohlraumgröße 20 x 20 x 4 cm wird maschinell mit der oben angegebenen Rohstoffmischung gefüllt. Nach einer Reaktions- und Aushärtezeit von 5 Minuten wurde entformt.

Die erhaltenen Formteile wurden bei 120°C im Umlufttrockenschrank separat getempert, die Dichte des Hinterfüllschaums betrug ca. 450 kg/m³.

Die Platte wurde ohne Vorzerkleinerung anschließend im Walzwerk unter folgenden Bedingungen gemahlen:
- Drehzahl Walze 1: : 20 U/min
- Drehzahl Walze 2: : 10 U/min
- Walzenspalt: : 60 µm
- Anzahl der Material-Durchgänge durch den Walzenspalt: : 3
- Erreichte mittlere Partikelgröße: : 65 µm

### Beispiel 3

Hier wird die Pulverherstellung aus Polyurethan-Weichschaum der Dichte von etwa 50 kg/m³ beschrieben. Für die Weichschaum-Herstellung diente folgende Rezeptur:

### A-Komponente:

100 Teile eines Polyetherpolyols der OH-Zahl 28, hergestellt durch Propoxylierung von Trimethylolpropan und anschließende Ethoxylierung des Propoxylierungsprodukts (PO:EO-Gewichtsverhältnis = 87:13)
3 Teile Wasser
0,12 Teile Bis-dimethylaminoethyl-ether
0,5 Teile einer 33 gew.-%igen Lösung von Triethylendiamin in Dipropylenglykol
0,6 Teile eines Gemischs aliphatischer Amine ("Vernetzer 56", ein Handelsprodukt der Bayer AG)
0,4 Teile eines handelsüblichen Polysiloxan-Stabilisators (Stabilisator KS 43 der Bayer AG)

### B-Komponente:

50,7 Teile eines Polyisocyanatgemischs der Diphenylmethanreihe mit einem Gehalt an Diisocyanatodiphenylmethan-Isomeren von 85 Gew.-%, die sich ihrerseits im wesentlichen aus 25 Gew.-% 2,4'-Diisocyanatodiphenylmethan und zum Rest aus 4,4'-Diisocyanatodiphenyl-methan zusammensetzen.

Die A-Komponente wird auf einer Hochdruckmaschine mit der B-Komponente vermischt und das Reaktionsgemisch in eine 40 1-Kastenform eingetragen, die auf etwa 50°C angewärmt ist. Die Form wird geschlossen und das Formteil nach etwa 6 Min. aus der Form genommen. Das Füllgewicht beträgt 2,38 kg.

### Mechanische Daten:

| | |
|---|---|
| Rohdichte nach DIN 53 420 | 55 kg/m³ |
| Stauchhärte nach DIN 53 577 | 6,4 kPa |
| Zugfestigkeit nach DIN 53 571 | 158 kPa |
| Bruchdehnung nach DIN 53 571 | 132 % |
| Druckverformungsrest nach DIN 53 572 | 6,7 % |
| 50 % Cₜ-Wert | |

Ein solchermaßen hergestellter Schaum wird ohne weitere Vorzerkleinerung direkt auf dem Walzwerk unter folgenden Bedingungen gemahlen:
- Drehzahl Walze 1: : 20 U/min
- Drehzahl Walze 2: : 10 U/min
- Walzenspalt: : 100 µm
- Anzahl der Material-Durchgänge durch den Walzenspalt: : 3
- Erreichte mittlere Partikelgröße: : 127 µm.

### Beispiel 4

In diesem Beispiel wird die Zerkleinerung eines Kompositbauteils, wie es im KFZ-Bau z.B. als Armaturentafel dient, beschrieben. Dieses Kompositbauteil hat folgende Materialzusammensetzung: (PVC/ABS-Dekorfolie, Bayfill-Schaum (Rezeptur siehe Beispiel 2), Fibrit-Träger (phenolharzgebundenes Zellulosematerial)
- Drehzahl Walze 1: : 28 U/min
- Drehzahl Walze 2: : 10 U/min
- Walzenspalt: : 75 µm
- Anzahl der Material-Durchgänge durch den Walzenspalt: : 4
- Erreichte mittlere Partikelgröße: : 80 µm

### Beispiel 5

Strohhalme, wie sie nach dem Dreschen von geerntetem Weizen als Abfall übrigbleiben, wurden in einer vorgeschnittenen Länge von 10 cm bis 40 cm über die Walze gegeben und pulverisiert.
- Drehzahl Walze 1: : 31 U/min
- Drehzahl Walze 2: : 8 U/min
- Walzenspalt: : 55 µ
- Anzahl der Material-Durchgänge durch den Walzenspalt: : 4
- Erreichte mittlere Partikelgröße: : 0,1 mm.

## Patentansprüche

1. Verfahren zum Zerkleinern von beliebigen Kunststoffen oder Kunststoffe enthaltenden Kompositen oder Gemischen bzw. Gemengen oder organischen, natürlichen Polymeren zwischen bevorzugt feststehend gelagerten Walzen, die sich mit definiertem Drehzahlverhältnis bzw. definiertem Schergeschwindigkeitsverhältnis im Walzenspalt gleich- oder gegensinnig drehen, dadurch gekennzeichnet, daß
a) eine Schergeschwindigkeit im Spalt von 0,0001 sec⁻¹ bis 100 000 sec⁻¹ eingehalten wird
und daß
b) die entweder alleine oder in Form von Kompositen oder Gemischen oder Gemengen eingesetzten Kunststoffmaterialien eine Mindest-Dichte von 0,5 kg/m³ haben.

2. Verfahren nach Anspruch 1, dadurch gekennzeichnet, daß die eingesetzten Kunststoffmaterialien eine Korngröße von 1 mm bis 1 m, bevorzugt 1 mm bis 10 cm, aufweisen.

3. Verfahren nach Ansprüchen 1 und 2, dadurch gekennzeichnet, daß die Walzen mit unterschiedlichen Drehgeschwindigkeiten betrieben werden.

4. Verfahren nach Ansprüchen 1 bis 3, dadurch gekennzeichnet, daß die Walzen so betrieben werden, daß im Walzenspalt ein Schergefälle von 100 sec⁻¹ bis 20 000 sec⁻¹, bevorzugt von 1 000 sec⁻¹ bis 10 000 sec⁻¹, herrscht.

5. Verfahren nach Ansprüchen 1 bis 4, dadurch gekennzeichnet, daß die Walzen eine Betriebstemperatur von 0°C bis 200°C, bevorzugt von 0°C bis 30°C, besonders bevorzugt 10°C bis 25°C, haben.

6. Verfahren nach Anspruch 1 bis 5, dadurch gekennzeichnet, daß Walzen mit einer stumpfen, bevorzugt aber mit einer glatten Oberfläche verwendet werden.

7. Verfahren nach Ansprüchen 1 bis 6, dadurch gekennzeichnet, daß die Walzen beim Mahlbetrieb einen Spalt unter 1 mm, bevorzugt unter 0,5 mm, besonders bevorzugt unter 0,1 mm, bilden.

8. Verfahren nach Ansprüchen 1 bis 7, dadurch gekennzeichnet, daß das Mahlgut gekühlt wird.

9. Verfahren nach Ansprüchen 1 bis 8, dadurch gekennzeichnet, daß die Kunststoffe chemisch und/oder physikalisch vernetzte Polyurethane, Polyharnstoffe bzw. Polyurethanharnstoffe bzw. Kompositbauteile unter Verwendung solcher Polyurethan(harn)stoffe sind.
